Europäisches Patentamt

European Patent Office

Office européen des brevets

(11) Publication number: **0 258 989**
**A1**

# (12) EUROPEAN PATENT APPLICATION

(21) Application number: 87306481.0

(22) Date of filing: 22.07.87

(51) Int. Cl.⁴: **B23B 31/26** , B23Q 11/00

| | |
|---|---|
| The title of the invention has been amended (Guidelines for Examination in the EPO, A-III, 7.3). | (71) Applicant: **SEIKO SEIKI KABUSHIKI KAISHA 3-1, Yashiki 4-chome Narashino-shi Chiba(JP)** |
| (30) Priority: 24.07.86 JP 113575/86 U | (72) Inventor: **Morita, Nobuo SEIKO SEIKI KABUSHIKI KAISHA 3-1, Yashiki 4-chome Narashino-shi Chiba(JP)** |
| (43) Date of publication of application: **09.03.88 Bulletin 88/10** | |
| (84) Designated Contracting States: **CH DE GB LI** | (74) Representative: **Miller, Joseph et al J. MILLER & CO. Lincoln House 296-302 High Holborn London WC1V 7JH(GB)** |

(54) Clamping device in a machine tool spindle.

(57) Apparatus for use in a machine tool comprising a spindle (3) within which is slidably mounted for axial movement therein a central shaft (5) which may be rotated in unison with the spindle (3), the central shaft (5) being provided with a chuck (6) having jaws whose relative positions depend upon the axial position of the central shaft (5) in the spindle (3), axial movement of the central shaft (5) in the spindle (3) in a first direction causing relative movement of the jaws in a closing direction, and axial movement of the central shaft (5) in the spindle (3) in a second direction causing relative movement of the jaws in an opening direction; urging means (8) for urging the central shaft (5) in the first direction; and power means (10) for moving the central shaft (5) in the second direction characterised in that chuck abnormality detector means (23) are provided for detecting when the central shaft (5) has been moved by the urging means (8) to a predetermined position indicating that the chuck (6) is broken or that its jaws have closed to a predetermined extent in which they do not or cannot satisfactorily grip a tool or tool holder.

"APPARATUS FOR USE IN A MACHINE TOOL"

The present invention relates to an apparatus for use in a machine tool and, although the invention is not so restricted, it relates more particularly to apparatus for detecting an abnormality in the clamping of a tool on the spindle of a machine tool as used in a machining centre.

A spindle unit for use on a machine tool is known which comprises a spindle rotatably held in a cylindrical casing. A central shaft which rotates with the spindle is inserted in an axially extending hole in the spindle. A chuck is formed at the front end of the central shaft. A tool holder for holding various tools is clamped by this chuck, and the rotation of the spindle is transmitted to the tool.

In order to cause the chuck to clamp the tool, the chuck integral with the central shaft is pulled rearwardly by a belleville spring, and a hydraulic cylinder capable of moving toward and away from the rear end of the central shaft is provided to unclamp the chuck. The central shaft is driven by this movement of the hydraulic cylinder to release the chuck from the force applied by the belleville spring, for unclamping the tool holder; otherwise the tool holder is clamped by the spring force.

When the chuck that grips the tool holder becomes damaged, the central shaft is moved backwardly by the action of the belleville spring, although no tool is mounted on the spindle. Then, the apparatus operates as if a tool were clamped. This presents problems in controlling the machining process, especially in the case where different machining operations are performed on the same spindle, using a machining centre or the like.

It is therefore an object of the present invention to provide an apparatus which is simple in structure but able to rapidly detect an abnormality in the clamping of a tool on the spindle of a machine tool.

According, therefore, to the present invention, there is provided apparatus for use in a machine tool comprising a spindle within which is slidably mounted for axial movement therein a central shaft which may be rotated in unison with the spindle, the central shaft being provided with a chuck having jaws whose relative positions depend upon the axial position of the central shaft in the spindle, axial movement of the central shaft in the spindle in a first direction causing relative movement of the jaws in a closing direction, and axial movement of the central shaft in the spindle in a second direction causing relative movement of the jaws in an opening direction; urging means for urging the central shaft in the first direction; and power means for moving the central shaft in the second direction characterised in that chuck abnormality detector means are provided for detecting when the central shaft has been moved by the urging means to a predetermined position indicating that the chuck is broken or that its jaws have closed to a predetermined extent in which they do not or cannot satisfactorily grip a tool or tool holder.

Preferably, further detector means are provided for detecting when the central shaft is in a first further position in which the jaws of the chuck are open to receive a tool or tool holder and a second further position in which the jaws of the chuck are closed to an extent in which they clamp a tool or tool holder therein.

The power means preferably comprises a double acting hydraulic cylinder which is movable between a first position, in which it moves the central shaft in the said second direction and against the action of the urging means so as to open the jaws of the chuck to receive a tool or tool holder, and a second position in which the hydraulic cylinder is normally spaced from the central shaft to permit the latter to be moved in the said first direction by the urging means so as to close the jaws of the chuck.

Preferably, a chuck abnormality-detecting shaft is slidably mounted in the hydraulic cylinder and is urged in the said second direction, the chuck abnormality-detecting shaft being normally spaced from the central shaft when the hydraulic cylinder is in its said second position, the chuck abnormality-detecting shaft being moved by the central shaft in the said first direction so as to actuate the chuck abnormality detector means when the jaws of the chuck have closed to the said predetermined extent.

The invention also comprises a machine tool apparatus provided with as set forth above.

In its preferred form, the apparatus according to the present invention thus uses a double acting hydraulic cylinder which is an improvement over a single acting hydraulic cylinder which has previously been used to cause the chuck to clamp or unclamp the tool. In the said preferred form, moreover, the abnormality-detecting shaft is always spring-biased forwardly in the said second direction, the chuck abnormality detector means being constituted by a switch which is closed when the rear end of the abnormality-detecting shaft reaches a certain position. In this way, the apparatus is simple in structure.

Accordingly, when the hydraulic cylinder has moved rearwardly, i.e. in the said first direction, and the chuck should clamp the tool, if the chuck is damaged, then the central shaft further moves rearwardly, pushing the abnormality-detecting shaft rearwards. Then, the said switch is closed. Thus, damage or abnormality of the chuck can be rapidly detected. This is advantageous in effecting control over the machining process. In particular, this is effective in performing a plurality of machining operations, using a machining centre or the like.

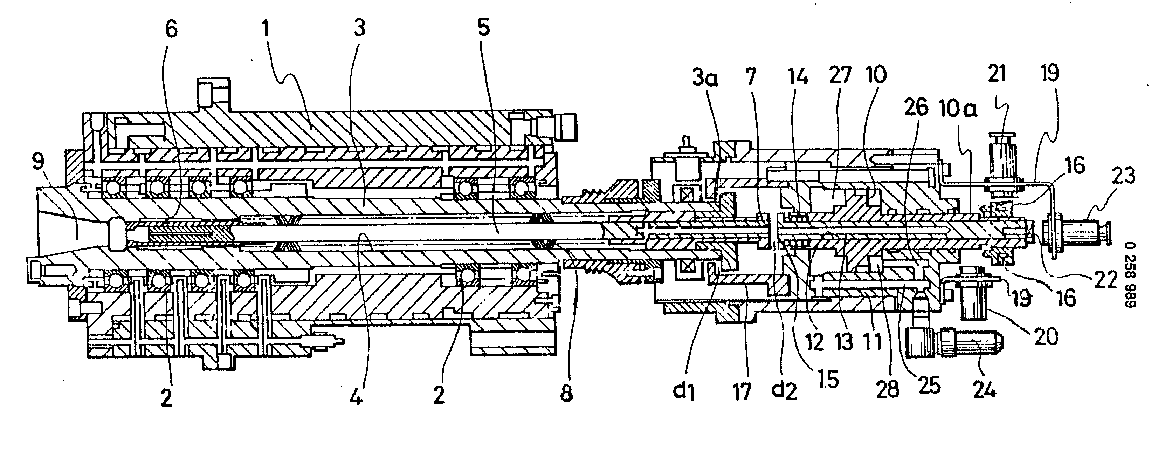

The invention is illustrated, merely by way of example, in the accompanying drawing which is a vertical cross section of an apparatus for detecting an abnormality in the clamping of a tool on the spindle of a machine tool, the apparatus being made in accordance with the present invention.

Referring to the drawing, an apparatus according to the present invention comprises a spindle 3 which is rotatably mounted within a cylindrical casing 1 via bearings 2. A central shaft 5, which rotates in unison with the spindle 3, is slidably mounted for axial movement in an axially extending hole 4 in the spindle 3. A chuck 6 for gripping the bottom of a tool holder (not shown) is formed at the front or forward end, i.e. the left hand end as seen in the drawing, of the central shaft 5. The chuck 6 has jaws (not shown) whose relative positions depend upon the axial position of the central shaft 5 in the spindle 3, axial movement of the central shaft 5 in the spindle 3 in a rearward direction (i.e. towards the right as seen in the drawing) causing relative movement of the jaws in a closing direction, and axial movement of the central shaft 5 in the spindle 3 in the opposite direction causing relative movement of the jaws in an opening direction. The rear end surface 7 of the central shaft 5 i.e. the surface at the right hand end of the central shaft 5 as seen in the drawing, can come into contact with an hydraulic cylinder 10, as further described below, so that it can be pushed by the latter forwardly.

The central shaft 5, which is integral with or secured to the chuck 6, is pulled rearwardly with a large force by a belleville spring 8.

A tapering hole 9 is formed at the front end of the spindle 3. The rotation of the spindle 3 is transmitted precisely to the tool, by utilizing the force of the belleville spring 8.

The apparatus incorporates a driving mechanism comprising the hydraulic cylinder 10 for clamping or unclamping the tool holder. This mechanism is next described.

The hydraulic cylinder 10 is so disposed that it can move both forwardly and rearwardly in a guide sleeve 11. A shaft 13, which is used to detect abnormality in the clamping of a tool on the spindle 3, is disposed in an axially extending hole 12 in the hydraulic cylinder 10. The shaft 13 is invariably biased toward the central shaft 5, i.e., forwardly, by a compressed coil spring 14. When the clamping of the tool is unsatisfactory, the rear end surface 7 of the central shaft 5 comes into contact with the front end surface 15 of the shaft 13, so as to move the latter to a position indicating that the jaws of the chuck 6 have closed to a predetermined extent in which they do not or cannot satisfactorily grip a tool or tool holder.

The outer peripherty of the hydraulic cylinder 10 has a cylinder rod 10a to which a detection body 16 which is made of a metal or other material, is fixed near the rear end of the hydraulic cylinder 10. The axial position of the detection body 16 is detected by proximity switches 20 and 21 which are mounted on the guide sleeve 11 via brackets 19. Thus, the axial position of the hydraulic cylinder 10 is detected, i.e. it is sensed whether the hydraulic cylinder 10 is in a position in which the chuck 6 clamps the tool holder or not.

That is to say, the switch 20, when closed, indicates that the central shaft 5 is in a first position in which the jaws of the chuck 6 are open to receive a tool or tool holder, while the switch 21, when closed, indicates that the central shaft 5 is in a second position in which the jaws of the chuck 6 are closed to an extent in which they properly clamp a tool or tool holder therein. Another detection body 22 is fixed to the rear end surface of the shaft 13. A proximity switch 23 is provided which is carried by a bracket 19, the proximity switch 23 being closed when the detection body 22 moves rearwardly into a certain position. The switch 23 is used to detect an abnormality, such as damage, of the chuck 6. Thus the switch 23 will detect when the central shaft 5 has been moved by the spring 8 to a predetermined position indicating that the chuck 6 is broken or that the jaws of the chuck 6 have closed to a predetermined extent in which they do not or cannot satisfactorily grip a tool or tool holder.

Oil passages 25 and 26 extend from an hydraulic pipe 24 into the guide sleeve 11. Either a first hydraulic chamber 27 or a second hydraulic chamber 28 is filled with oil from the oil passage 25 or 26 to translate the hydraulic cylinder 10 within the guide sleeve 11 forwardly or rearwardly. Thus the hydraulic cylinder 10 is a double acting hydraulic cylinder which is movable between a first position (not shown) in which it moves the central shaft 5 forwardly, against the action of the spring 8, so as to open the jaws of the chuck 6 to receive a tool or tool holder, and a second position, which is shown in the drawing, in which the hydraulic cylinder 10 is normally spaced from the central shaft 5 to permit the latter to be moved rearwardly by the spring 8 so as to close the jaws of the chuck 6.

The apparatus constructed as described thus far operates as follows. In the condition shown in the drawing, the chuck 6 clamps the tool holder. In this state, the hydraulic cylinder 10 has moved to its rear position. The inside of the first hydraulic chamber 27 is filled with oil from the oil passage 25. When the cylinder 10 is in this rear position, the chuck 6 is caused to grip the bottom of the tool holder (not shown) by the force of the belleville spring 8. Under this condition, the spindle 3 can rotate in synchronism with the tool holder. The proximity switch 21 for detecting the position is closed to indicate that the tool holder is clamped.

When the hydraulic cylinder 10 has been so moved rearwardly, the guide sleeve 11 is pulled forwardly by the reaction. Then, a gap $d1$ is formed between a spindle support member 17, which is fixed to the sleeve 11, and the rear end $3a$ of the spindle 3. Also, a gap $d2$ is formed between the rear end surface 7 of the central shaft 5 and the front end surface 15 of the shaft 13. Therefore, during a machining step, even if the spindle 3 rotates at a high speed, the hydraulic cylinder 10 is not affected.

When the machining step ends, the second hydraulic chamber 28 is filled with oil from the oil passage 26. At this time, the hydraulic cylinder 10 moves forwardly relative to the guide sleeve 11. The shaft 13 moves together with the cylinder 10. The front end surface 15 of the shaft 13 pushes the central shaft 5 forwardly. The chuck 6 is released from the force of the spring 8 and moves forward so as to expand outwardly, thus unclamping the tool holder. Then, the tool holder is gripped by an exchanging arm (not shown) and pulled out. This unclamped condition of the tool holder is indicated when the proximity switch 20 detects the detection body 16 and the resulting signal is received.

A tool holder for the next machining operation is inserted into the tapering hole 9 in the spindle 3, the bottom of the tool holder being arranged to be gripped by the chuck 6. At this time, the first hydraulic chamber 27 is filled with oil from the oil passage 25. The hydraulic cylinder 10 is moved rearwardly relative to the guide sleeve 11. Thus, the condition shown in the drawing is reached. Then, the proximity switch 21 detects that the detection body 16 is in a position in which the tool holder is clamped.

When the hydraulic cylinder 10 is in the position shown in the drawing, i.e., when the tool is clamped, if the chuck 6 is damaged or its operation is otherwise impaired, then the central shaft 5 is moved rearwardly by the action of the belleville spring 8. This pushes the shaft 13 rearwardly against the force of the compressed coil spring 14. When the hydraulic cylinder 10 is in its rear position, if the shaft 13 is moved rearwardly by the central shaft 5, then the proximity switch 23 detects the detection body 22, whereby the abnormality of the chuck 6 on the spindle 3 can be rapidly detected. Consequently, the subsequent machining steps are cancelled to prevent poor machining.

As described above, the hydraulic cylinder 10 for clamping or unclamping the tool holder on the spindle 3 is a double acting hydraulic cylinder. The shaft 13 which is used for detecting the said abnormality is mounted in the cylinder 10 and is biased forwardly. The abnormality-detecting switch 23 is closed when the rear end of the shaft 13 reaches a certain position. In this way, the apparatus is simple in structure. If the chuck 6 on the spindle 3 is damaged or its operation is otherwise impaired, the shaft 13 for detecting such abnormality moves rearwardly, and the switch 23 for detecting the abnormality is actuated quickly. In the past, any abnormality in the clamping of the tool could not be detected before a poor machining operation took place. In the case of the apparatus described above, however, any abnormality in the clamping of the tool on the spindle can be detected earlier than previously, and can be coped with quickly. This is quite advantageous in controlling the machining process. In particular, the apparatus of the present invention is particularly suited to a spindle unit for high-speed machining, such as a machining centre.

## Claims

1. Apparatus for use in a machine tool comprising a spindle (3) within which is slidably mounted for axial movement therein a central shaft (5) which may be rotated in unison with the spindle (3), the central shaft (5) being provided with a chuck (6) having jaws whose relative positions depend upon the axial position of the central shaft (5) in the spindle (3), axial movement of the central shaft (5) in the spindle (3) in a first direction causing relative movement of the jaws in a closing direction and axial movement of the central shaft (5) in the spindle (3) in a second direction causing relative movement of the jaws in an opening direction; urging means (8) for urging the central shaft (5) in the first direction; and power means (10) for moving the central shaft (5) in the second direction characterised in that chuck abnormality detector means (23) are provided for detecting when the central shaft (5) has been moved by the urging means (8) to a predetermined position, indicating that the chuck (6) is broken or that its jaws have closed to a predetermined extent in which they do not or cannot satisfactorily grip a tool or tool holder.

2. Apparatus as claimed in claim 1 characterised in that further detector means (20,21) are provided for detecting when the central shaft (5) is in a first further position in which the jaws of the chuck (6) are open to receive a tool or tool holder and a second further position in which the jaws of the chuck (6) are closed to an extent in which they clamp a tool or tool holder therein.

3. Apparatus as claimed in claim 1 or 2 characterised in that the power means (10) comprises a double acting hydraulic cylinder (10) which is movable between a first position, in which it moves the central shaft (5) in the said second direction and against the action of the urging means (8) so as to open the jaws of the chuck (6) to receive a tool or tool holder, and a second position in which the hydraulic cylinder (10) is normally spaced from the central shaft (5) to permit the latter to be moved in the said first direction by the urging means (8) so as to close the jaws of the chuck (6).

4. Apparatus as claimed in claim 3 characterised in that a chuck abnormality-detecting shaft (13) is slidably mounted in the hydraulic cylinder (10) and is urged in the said second direction, the chuck abnormality-detecting shaft (13) being normally spaced from the central shaft (5) when the hydraulic cylinder (10) is in its said second position, the chuck abnormality-detecting shaft (13) being moved by the central shaft (5) in the said first direction so as to actuate the chuck abnormality detector means (23) when the jaws of the chuck (6) have closed to the said predetermined extent.

5. A machine tool characterised by being provided with apparatus as claimed in any preceding claim.

6. An apparatus for detecting abnormality of clamping of a tool on the spindle (3) of a machine tool, said apparatus comprising:

a spindle (3) rotatably held by a cylindrical casing (1);

a central shaft (5) inserted in an axially extending hole (4) in the spindle (3) and being capable of rotating with the spindle (3), the central shaft (5) having a chuck (6) at its front end, the chuck (6) acting to grip the bottom of a tool holder;

a spring means (8) for biasing the central shaft (5) rearwardly;

an hydraulic cylinder (10) for moving the central shaft (5) forward or rearward to cause the chuck (6) to clamp or unclamp a tool, the hydraulic cylinder (10) being capable of moving forward and rearward;

an abnormality-detecting shaft (13) inserted in an axially extending hole (12) in the hydraulic cylinder (10) and spring-biased forwardly; and

a switch (23) for detecting abnormality of the chuck (6);

and wherein when the chuck (6) is in trouble and the hydraulic cylinder (10) is in its rear position, the front end of the abnormality-detecting shaft (13) makes contact with the rear end of the central shaft (5) and is pressed against the central shaft (5), rearwardly moving the rear end of the abnormality-detecting shaft (13) into a certain position, which is detected by the switch (23).

0 258 989

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 102 401 (GIDDINGS) * page 11, line 22 - page 13, line 27; claims 1-10; figures 1-3 * | 1-3 | B 23 B 31/26 B 23 Q 11/00 |
| A | | 4-6 | |
| P,A | EP-A-0 221 802 (AEROSPATIALE) * claims 1,8; figure 3 * | 1,2,6 | |
| A | CA-A- 952 720 (TRUE TECH EQUIPMENT) * claim 1, figure 3 * | 1,3 | |

TECHNICAL FIELDS SEARCHED (Int. Cl.4)

B 23 B 31/00
B 23 Q 15/00
B 23 Q 11/00

The present search report has been drawn up for all claims

| Place of search | Date of completion of the search | Examiner |
|---|---|---|
| BERLIN | 20-11-1987 | BERNAS Y.N.E. |